# EUROPÄISCHE PATENTSCHRIFT

(11) **EP 2 533 036 B1**
(45) Veröffentlichungstag und Bekanntmachung des Hinweises auf die Patenterteilung: **21.03.2018**
(21) Anmeldenummer: 12170529.7
(22) Anmeldetag: 01.06.2012
(51) Int. Cl.: C02F 1/467

(54) **Verfahren zum Betrieb eines Leitfähigkeitssensors, insbesondere zur Reinigung der Elektrodenoberflächen des Leitfähigkeitssensors, und Wasserenthärter enthaltend einen solchen Leitfähigkeitssensor**
Method for operating a conductivity sensor, in particular for cleaning the electrode surfaces of the conductivity sensor, and water softener comprising said conductivity sensor
Procédé de fonctionnement d'un capteur de conductivité, notamment pour le nettoyage des surfaces d'électrodes du capteur de conductivité, et adoucisseur comprenant un tel capteur de conductivité

(30) Priorität: 09.06.2011 DE 102011077326
(43) Veröffentlichungstag der Anmeldung: 12.12.2012
(73) Patentinhaber: Judo Wasseraufbereitung GmbH, 71364 Winnenden (DE)
(72) Erfinder: Melcher, Siegfried, 71720 Oberstenfeld (DE)
(74) Vertreter: Kohler Schmid Möbus Patentanwälte

(56) Entgegenhaltungen:
- DE-A1- 4 410 953
- DE-A1- 10 309 769
- GB-A- 1 603 013
- JUDO Wasseraufbereitungs GmbH: "Einbau- und Betriebsanleitung JUDO i-soft", , 16. Januar 2009 (2009-01-16), Seiten 1-32, XP002681492, Gefunden im Internet: URL:http://www.judo.eu/judo/BETRIEBSANLEIT UNGEN/DE/Enthaertung/Art-Nr_1702021_i-soft .pdf [gefunden am 2012-08-08]

## Beschreibung

Die Erfindung betrifft ein Verfahren zum Betrieb eines Leitfähigkeitssensors, der mindestens zwei Messelektroden umfasst,
wobei die Messelektroden des Leitfähigkeitssensors in einem Reinigungsbetrieb mit einem Elektrolysestrom beaufschlagt werden. Ein solches Verfahren ist bekannt geworden durch die DE 103 09 769 A1. Das Dokument JUDO WASSSERAUFBEREITUNGS GMBH "Einbau- und Betriebsanleitung JUDO i-soft" (16-01-2009) 1-32, URL: http://www.judo.eu/ judo/BETRIEBSANLEITUNGEN/DE/Enthaertung/Art.-Nr_1702021_i-soft.pdf offenbart eine automatische Wasserenthärtungsanlage mit einem Sensor zur Überwachung von Rohwasser, einer Regenerationsfunkion und einer Desinfektionsfunktion. Aus der GB1603016 ist eine Wasserbehandlungsvorrichtung mit einer elektrolytischen Reinigunsfunktion bekannt geworden. Leitfähigkeitssensoren werden dazu eingesetzt, auf einfache Weise Eigenschaften (insbesondere den Ionengehalt) einer zu untersuchenden (typischerweise wässrigen) Messlösung zu bestimmen. Leitfähigkeitssensoren werden insbesondere dazu eingesetzt, die Härte von Wasser zu bestimmen; hierbei wird mittels einer Kalibrierfunktion die Leitfähigkeit in eine Härte umgerechnet. Eine so ermittelte Wasserhärte kann beispielsweise zur Steuerung einer Wasserverschneidung eingesetzt werden, so dass eine bestimmte Mischwasserhärte erhalten wird, oder auch zur Mitverfolgung der Restkapazität eines Wasserenthärters, so dass es dank rechtzeitiger Regeneration nicht zu einem Härtedurchbruch kommt.

Zur Bestimmung der Leitfähigkeit wird im einfachsten Fall der elektrische Widerstand zwischen zwei in die Messlösung eingetauchten bzw. von der Messlösung umspülten Messelektroden bestimmt, wobei eine Wechselspannung zwischen den Messelektroden angelegt ist. Bei bekannter Geometrie der Messelektroden bzw. mit entsprechender Kalibrierung kann dann die absolute elektrische Leitfähigkeit der Messlösung berechnet werden. Die Bestimmung der Leitfähigkeit auf diese Weise erfordert nur einen geringen apparativen Aufwand und ist sehr schnell; insbesondere kann auch eine kontinuierliche Bestimmung der Leitfähigkeit erfolgen.

Auf den Elektrodenoberflächen der Elektroden von Leitfähigkeitssensoren bilden sich mit der Zeit Beläge durch Ausfällungen von in der Messlösung gelösten Stoffen, beispielsweise Kalkbeläge. Diese Beläge verursachen zusätzliche Widerstände und verfälschen dadurch das Messergebnis des Leitfähigkeitssensors. Daher sollten die Elektrodenoberflächen gelegentlich gereinigt werden. Zur Reinigung von Leitfähigkeitssensoren sind verschiedene Methoden bekannt.

Eine mechanische Abreinigung der Beläge, beispielsweise mittels Bürste, Abstreifer oder dergleichen, ist umständlich, da hierzu in der Regel ein Ausbau des Leitfähigkeitssensors erforderlich ist. Außerdem besteht die Gefahr, die empfindlichen Messelektroden zu beschädigen.

Die Auftragung von Säuren und anderen Reinigungsmitteln auf die Elektrodenoberflächen ist ebenfalls umständlich. Zudem ist der Umgang mit aggressiven Reinigern gefährlich, insbesondere wenn die Reinigung von Laien (etwa von einem Hausbesitzer selbst bei seiner Hauswasseraufbereitungsanlage) durchgeführt wird.

Die DE 103 09 769 A1 schlägt vor, dass ein Leitfähigkeitssensor zur Reinigung der Elektrodenoberfläche mit einem Elektrolysestrom beaufschlagt wird. Wie dies im Einzelnen durchgeführt werden soll, ist in der DE 103 09 769 A1 nicht erläutert.

Vierpolige Leitfähigkeitssensoren verwenden zwei Stromelektroden und zwei Spannungselektroden. Über die zwei Stromelektroden wird ein elektrischer Strom in die Lösung eingeprägt, und über die zwei Spannungselektroden wird die entsprechende Spannung gemessen, welche über der Messlösung abfällt. Der Spannungsabfall hängt von der Leitfähigkeit der Lösung ab. Solche vierpoligen Leitfähigkeitssensoren sind aufgrund dieses Messprinzips etwas unempfindlicher gegen Verschmutzung der Elektrodenoberflächen, jedoch sind diese Leitfähigkeitssensoren naturgemäß teuer.

### Aufgabe der Erfindung

Es ist die Aufgabe der vorliegenden Erfindung, ein einfaches, kostengünstiges und schnelles Verfahren zur Reinigung der Elektrodenoberflächen der Messelektroden eines Leitfähigkeitssensors vorzustellen.

### Kurze Beschreibung der Erfindung

Diese Aufgabe wird gemäß der vorliegenden Erfindung dadurch gelöst, dass im Reinigungsbetrieb eine Gleichspannung U_{RB} an die Messelektroden des Leitfähigkeitssensors angelegt wird, wobei die Messelektroden des Leitfähigkeitssensors als Anode gegen wenigstens eine weitere Elektrode geschaltet werden, die keine Messelektrode des Leitfähigkeitssensors ist, sondern eine Elektrode einer elektrolytischen Wasserbehandlungsvorrichtung und dass die im Reinigungsbetrieb angelegte Gleichspannung größer ist als die Zersetzungsspannung von Wasser.

Die Messelektroden eines Leitfähigkeitssensors bleiben in vielen Anwendungsfällen ständig in Kontakt mit einer (wässrigen) Messlösung. Die zur Messung der Leitfähigkeit der Messlösung im Normalbetrieb (NB) an die Messelektroden des Leitfähigkeitssensors angelegte Spannung ist in der Regel eine Wechselspannung, die kleiner ist als die Zersetzungsspannung des Wassers; dies verringert die Bildung von Ablagerungen an den Elektrodenoberflächen. Trotzdem entstehen im Laufe der Zeit auf den Elektrodenoberflächen des Leitfähigkeitssensors so starke Beläge, dass das Messergebnis merklich verfälscht wird.

Bei den Ablagerungen handelt es sich in der Regel um Ausfällungen von Ionen, die in der Messlösung vorhanden sind, insbesondere in Form von Kalk sowie von Hydroxiden und/oder Oxiden des Eisens und Mangans. Darüber hinaus können je nach Messlösung auch organische Verunreinigungen auftreten.

Im Reinigungsbetrieb (RB) des Leitfähigkeitssensors wird eine Gleichspannung angelegt, wobei die Messelektroden des Leitfähigkeitssensors als Anode geschaltet werden, während eine weitere Elektrode als Kathode geschaltet ist. Die Messelektroden und die weitere Elektrode stehen typischerweise über die Messlösung in leitender Verbindung. An den Anoden bilden sich durch elektrolytische Zersetzung von Wasser Säure und Sauerstoff gemäß:

2 H₂O → 4 H⁺ + O₂ + 4 e⁻

Die gebildete Säure löst Ablagerungen und befreit die Elektrodenoberflächen von Belägen. Zusätzlich werden Verschmutzungen durch das Aufsteigen von direkt auf der Elektrodenoberfläche gebildeten Sauerstoffbläschen von dieser abgehoben. Falls gewünscht kann die Messlösung während des Reinigungsbetriebs zumindest zeitweise stehen (stagnieren), um die gebildete Säure eine gewisse Zeit einwirken lassen zu können (und nicht sofort nach ihrer Entstehung fortzuspülen). Ebenso kann, falls gewünscht, gegen Ende des Reinigungsbetriebs die Messlösung um die Messelektroden und auch um die weitere Elektrode ausgespült werden, um die abgelösten Beläge, die Säure und Lauge (die kathodenseitig entsteht) zu entfernen. Bei üblichen Leitfähigkeitssensoren sind jedoch eine Messlösungsstagnation und ein Ausspülen der Messlösung wegen der kleinen Messelektrodenabmessungen in der Regel entbehrlich.

Da die Messelektroden des Leitfähigkeitssensors alle gleichzeitig als Anode geschaltet werden, kann eine sehr rasche Reinigung aller Messelektroden des Leitfähigkeitssensors erfolgen.

Bevorzugt wird als weitere Elektrode eine bereits in der Wasserinstallation, die den Leitfähigkeitssensor enthält, vorhandene Elektrode eingesetzt (beispielsweise eine Elektrode zur Chlorerzeugung, mit der ein lonentauscher desinfiziert werden kann), so dass für das Verfahren keine zusätzliche Elektrode eingerichtet werden muss. Falls keine vorhandene Elektrode als weitere Elektrode zur Verfügung steht, kann die weitere Elektrode speziell eingerichtet werden (d. h. die weitere Elektrode wird dann ausschließlich für den Reinigungsbetrieb des Leitfähigkeitssensors eingesetzt). Als Kathode kann insbesondere ein Stück Rohrleitung, das die Messlösung führt und aus elektrisch leitfähigem Material (etwa Kupfer) besteht, kontaktiert werden. Bevorzugt ist die Kathode dann auf Erdpotential.

Die Zersetzungsspannung von Wasser beträgt ca. 1,2V; bevorzugt ist die Gleichspannung U_{RB} aber mindestens zu 1,8V oder weiter bevorzugt mindestens zu 2,0V gewählt, um problemlos kinetische Hemmungen (sogenannte "Überspannungen") zu überwinden.

### Bevorzugte Varianten der Erfindung

Bei einer vorteilhaften Variante des erfindungsgemäßen Verfahrens wird als weitere Elektrode eine Elektrode einer elektrolytischen Wasserbehandlungsvorrichtung verwendet. Als eine solche elektrolytische Wasserbehandlungsvorrichtung kommt beispielsweise eine elektrolytische Kalkschutz- oder Desinfektionsvorrichtung in Betracht. Kontrolliert der Leitfähigkeitssensor die Wasserqualität in einer elektrolytischen Kalkschutz- oder Desinfektionsvorrichtung, so kann eine dort bereits vorhandene Elektrode kathodisch gegen die Messelektroden des Leitfähigkeitssensors geschaltet werden. Es wird dann für den Reinigungsbetrieb des Leitfähigkeitssensors keine zusätzliche Elektrode benötigt. Dies vereinfacht den apparativen Aufbau und spart Kosten. Alternativ kann eine zusätzliche Elektrode ausschließlich für den Reinigungsbetrieb des Leitfähigkeitssensors vorgesehen sein.

Eine bevorzugte Weiterentwicklung dieser Variante sieht vor, dass die elektrolytische Wasserbehandlungsvorrichtung eine in einer Wasserenthärtungsanlage integrierte Desinfektionsvorrichtung ist. Moderne Wasserenthärtungsanlagen können mit Hilfe von Leitfähigkeitssensoren gesteuert werden, die die Wasserqualität erfassen. Wasserenthärtungsanlagen nach DIN EN 19636-100 enthalten darüber hinaus zum Schutz vor Verkeimung eine Desinfektionsvorrichtung, die in der Regel elektrolytisch arbeitet. Eine Elektrode der Desinfektionsvorrichtung kann dann zur Reinigung des Leitfähigkeitssensors kathodisch gegen die Elektroden des Leitfähigkeitssensors geschaltet werden.

Besonders bevorzugt ist auch eine Verfahrensvariante, bei der der Leitfähigkeitssensor in einem Wechsel von
- Normalbetrieb (NB), in welchem die Messelektroden mit einer Wechselspannung U_{NB} beaufschlagt werden und die elektrische Leitfähigkeit einer Messlösung gemessen wird, und
- Reinigungsbetrieb (RB)
betrieben wird. Durch die Leitfähigkeitsmessung im Normalbetrieb mit Wechselspannung zwischen den Messelektroden werden elektrochemische Prozesse weitgehend vermieden, so dass die Wasserqualität durch die Messung nicht verändert wird; Ablagerungen an den Messelektrodenoberflächen sind minimiert. Die Wechselspannung sollte so gering gewählt werden, dass die Zersetzungsspannung von Wasser nicht überschritten wird. Typische Frequenzen der Wechselspannung liegen zwischen 500 Hz und 5 kHz, bevorzugt bei ca. 1 kHz; die Wechselspannung ist typischerweise sinusförmig. Die Messlösung steht im Kontakt mit den Messelektroden; typischerweise fließt Messlösung zumindest zeitweise während des Normalbetriebs durch den Leitfähigkeitssensor.

Bevorzugt ist eine Weiterentwicklung dieser Variante, bei der gilt: 10 ≤ U_{RB}/U_{NB}⁰ ≤ 2500, mit U_{NB}⁰: maximale Spannungsdifferenz zwischen den Messelektroden während einer Periode von U_{NB}. Diese Spannungsverhältnisse haben sich in der Praxis bewährt. Insbesondere werden bei Spannungen U_{NB}⁰ zwischen 10mV und 100mV wenig Ablagerungen gebildet, und bei Spannungen U_{RB} zwischen 2V und 25V wird die Reinigung der Messelektroden schnell und intensiv durchgeführt.

Besonders bevorzugt ist auch eine Weiterentwicklung, bei der der Reinigungsbetrieb (RB) nach Ablauf einer vorgegebenen Zeitdauer des Normalbetriebs (NB) gestartet wird. Der Reinigungsbetrieb (RB) wird in typischerweise regelmäßigen Abständen, die durch Zeitablauf, oder auch über eine durch den Leitfähigkeitssensor geflossene Messlösungsmenge definiert sein können, durchgeführt. Die meisten Beläge bilden sich unabhängig von der durch den Leitfähigkeitssensor fließenden Menge an Messlösung, so dass ein durch Zeitablauf bestimmtes Reinigungsintervall eine gute Kontrolle der Ablagerungen an den Messelektrodenoberflächen ermöglicht. Die vorgegebene Zeitdauer bzw. das entsprechende "Reinigungsintervall" ist typischerweise zwischen einmal pro Woche und einmal pro drei Monate, z.B. einmal pro Monat. Ein mengendefinierter Beginn des Reinigungsbetriebs (RB) kann beispielsweise erfolgen, wenn - abhängig von der Qualität der Messlösung - 1 bis 50 m³ Messlösung durch den Leitfähigkeitssensor geflossen sind. Wird der Leitfähigkeitssensor zur Steuerung einer Enthärtungsanlage verwendet, so kann der Reinigungsbetrieb (RB) des Leitfähigkeitssensors während einer Regeneration der Wasserenthärtungsanlage durchgeführt werden.

Vorteilhaft ist es dabei, wenn die vorgegebene Zeitdauer abhängig ist von der Leitfähigkeit der im Normalbetrieb durch den Leitfähigkeitssensor fließenden Messlösung. Die Leitfähigkeit steigt mit zunehmender Wasserhärte bzw. allgemein höheren Konzentrationen von enthaltenen Ionen an. Je mehr Ionen die durch den Leitfähigkeitssensor fließende wässrige Messlösung enthält, desto schneller bilden sich Beläge (etwa Kalkablagerungen) an den Elektrodenoberflächen des Leitfähigkeitssensors. Der Reinigungsbetrieb kann dann entsprechend früher durchgeführt werden, so dass der maximale Verschmutzungsgrad der Messelektrodenoberflächen begrenzt wird.

Bevorzugt ist auch eine Weiterentwicklung, bei der der Reinigungsbetrieb gestartet wird, wenn im Normalbetrieb eine vom Leitfähigkeitssensor registrierte Abnahme der Leitfähigkeit einen vorgegebenen Grenzwert überschreitet. Durch die Bildung von Ablagerungen auf den Elektrodenoberflächen entsteht eine Isolationsschicht, entsprechend sinkt der in der Leitfähigkeitsmesszelle auftretende Stromfluss. Dieser Stromfluss ist das Maß für die elektrische Leitfähigkeit der Messlösung. Beispielsweise kann als vorgegebener Grenzwert (bei dem eine Reinigung gestartet wird) eine Abnahme von 10% (oder ein anderer Prozentsatz, typischerweise zwischen 5 und 15%) gegenüber der Leitfähigkeit unmittelbar nach Beginn des Normalbetriebs vorgesehen sein. Der vorgegebene Grenzwert ist typischerweise in einer elektronischen Steuerung hinterlegt. Um eine Verfälschung der Messwerte durch Stagnationseffekte zu vermeiden, erfolgt die Messung der Leitfähigkeit bevorzugt nur, wenn die Messlösung - in der Regel eine wässrige Lösung - durch die Leitfähigkeitsmesszelle fließt. Ebenso wird auf eine Auswertung der Messergebnisse bevorzugt verzichtet, bis eine Mindestmenge, beispielsweise ein Liter, durch die Leitfähigkeitsmesszelle geflossen ist.

Bevorzugt ist dabei vorgesehen, dass der Reinigungsbetrieb jedoch nicht gestartet wird, wenn die registrierte Abnahme in kürzerer Zeit als eine vorgegebene Grenzzeitdauer auftritt. Wenn eine Leitfähigkeitsänderung "spontan" (d.h. sehr plötzlich) auftritt, deutet dies auf einen Wechsel der Wasserqualität hin, und nicht auf die Bildung von Belägen auf den Elektrodenoberflächen, denn diese führen zu einer allmählichen (langsamen) Abnahme der Leitfähigkeit. Daher braucht bei "spontanen" Leitfähigkeitsänderungen im Allgemeinen keine Abreinigung erfolgen. Beispielsweise kann als vorgegebene Grenzzeitdauer 5 Minuten (oder ein andere Zeitdauer, typischerweise zwischen 3 min und 30 min) vorgesehen sein. Die vorgegebene Grenzzeitdauer ist typischerweise in einer elektronischen Steuerung hinterlegt.

In einer weiteren, vorteilhaften Weiterentwicklung wird nach einer definierten Zeit ab Beginn des Reinigungsbetriebs vom Reinigungsbetrieb in den Normalbetrieb gewechselt. Die definierte Zeit (Reinigungsdauer) kann fest vorgegeben sein, beispielsweise 5 Minuten (oder ein andere Zeitdauer, typischerweise zwischen 3 min und 15 min), oder aber abhängig von der Leitfähigkeit (bzw. der Härte) der wässrigen Messlösung sein. Die definierte Zeit (oder gegebenenfalls die Funktionalität zur Bestimmung der definierten Zeit aus der Leitfähigkeit oder Härte) ist typischerweise in einer elektronischen Steuerung hinterlegt.

Besonders vorteilhaft ist eine Weiterentwicklung, bei der in den Reinigungsbetrieb zurückgewechselt wird, wenn die Leitfähigkeit gemessen zu Beginn des Normalbetriebes nach einem Reinigungsbetrieb einen ersten Mindestwert nicht überschreitet. Im Reinigungsbetrieb werden die Elektrodenoberflächen von Belägen befreit; die Leitfähigkeit steigt entsprechend. Erreicht die Leitfähigkeit nach dem Reinigungsbetrieb nicht den (vorgegebenen) ersten Mindestwert, so kann davon ausgegangen werden, dass die Abreinigung der Elektrodenoberflächen unvollständig war und ein weiterer Reinigungsbetrieb notwendig ist. Beispielsweise kann der Reinigungsbetrieb sofort wiederholt werden, wenn die unmittelbar nach der Abreinigung gemessene Leitfähigkeit nicht mindestens 95% (oder einen anderen Prozentsatz, typischerweise zwischen 85% und 98%) des Wertes zu Beginn des vorherigen Normalbetriebes beträgt.

Ebenfalls vorteilhaft ist eine Weiterentwicklung, bei der eine Alarmmeldung erfolgt, wenn die unmittelbar vor und unmittelbar nach dem letzten Reinigungsbetrieb gemessenen Leitfähigkeiten zumindest näherungsweise gleich sind und einen zweiten Mindestwert nicht überschreiten. Sind die Leitfähigkeiten unmittelbar vor und nach dem Reinigungsbetrieb gleich und vergleichsweise niedrig (wie durch den vorgegebenen zweiten Mindestwert festgelegt), so liegt wahrscheinlich ein Defekt vor oder die Ablagerungen lassen sich nicht zufriedenstellend durch die angewandte elektrolytische Methode abreinigen. Durch die Alarmmeldung können weitere Maßnahmen initiiert werden (etwa eine Reparatur oder eine ausnahmsweise händische Reinigung der Messelektrodenoberflächen). Die Alarmmeldung kann insbesondere akustisch und/oder optisch und/oder durch Datenübertragung beispielsweise auf ein Handy oder an eine Leitwarte erfolgen. Die beiden Leitfähigkeiten gelten typischerweise als näherungsweise gleich, wenn sie sich um weniger als einen gewissen Prozentsatz bezogen auf die Leitfähigkeit unmittelbar vor dem letzten Reinigungsbetrieb, beispielsweise um weniger als 3% (oder einen anderen Prozentsatz, meist zwischen 1% und 5% gewählt), unterscheiden. Zur Vermeidung von Fehlalarmen kann im Rahmen der Erfindung auch vorgesehen sein, dass erst bei zwei (oder noch mehr) Reinigungszyklen in Folge, für die die Leitfähigkeiten vor und nach der jeweiligen Reinigung näherungsweise gleich geblieben und unter dem zweiten Mindestwert geblieben sind, eine Alarmmeldung ausgegeben wird. Dies vermeidet einen Alarm bei einer zufälligen Übereinstimmung der Leitfähigkeiten vor und nach einem Reinigungsbetrieb aufgrund einer veränderten Wasserzusammensetzung, die den Reinigungseffekt gerade kompensiert.

In den Rahmen der vorliegenden Erfindung fällt auch eine Wasserinstallation entsprechend Anspruch 13. Bevorzugt ist eine Ausführungsform der erfindungsgemäßen Wasserinstallation, bei der weiterhin eine elektronische Steuereinheit vorgesehen ist, mit der zwischen
- einer Beaufschlagung der Messelektroden mit einer Wechselspannung in einem Normalbetrieb zur Messung der elektrischen Leitfähigkeit einer Messlösung und
- einer Beaufschlagung der Messelektroden als Anode und der weiteren Elektrode als Kathode mit der Gleichspannung U_{RB} aus der Gleichspannungsquelle in einem Reinigungsbetrieb umgeschaltet werden kann, insbesondere wobei die elektronische Steuereinheit dazu ausgebildet ist, gemäß einem der obigen Ansprüche zwischen dem Normalbetrieb und dem Reinigungsbetrieb zu wechseln. Mit der elektronischen Steuereinheit kann der Wechsel zwischen Normalbetrieb und Reinigungsbetrieb automatisiert erfolgen; der Leitfähigkeitssensor kann dann mit besonders hoher Zuverlässigkeit betrieben werden.

In den Rahmen der vorliegenden Erfindung fällt auch eine Wasserenthärtungsanlage mit integrierter Desinfektionsvorrichtung, wobei die weitere Elektrode zur Desinfektionsvorrichtung gehört, insbesondere wobei die weitere Elektrode eine Chlorelektrode ist. Die Wasserenthärtungsanlage kann mithilfe des Leitfähigkeitssensors die Rohwasserhärte überwachen. Durch die Nutzung einer Elektrode der Desinfektionsvorrichtung als weitere Elektrode braucht keine zusätzliche Elektrode als weitere Elektrode eingerichtet zu werden. Die Chlorelektrode in der Desinfektionsvorrichtung ist im Desinfektionsbetrieb an der Erzeugung von Chlorgas (Cl₂) aus Chloridionen beteiligt (man beachte, dass zur Chlorerzeugung grundsätzlich eine Anode, an der das Chlorgas entsteht, und eine Kathode erforderlich sind; als die weitere Elektrode kann sowohl die Anode als auch die Kathode der Chlorerzeugung ausgewählt werden); aus dem Chlorgas entsteht in Wasser insbesondere hypochlorige Säure, die keimtötend wirkt.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1: ein Ablaufdiagramm einer Variante eines erfindungsgemäßen Betriebsverfahrens;
- Fig. 2a: eine schematische Ansicht einer Leitfähigkeitssensorstation im Normalbetrieb gemäß der Erfindung;
- Fig. 2b: die Leitfähigkeitssensorstation von Fig. 2a im Reinigungsbetrieb gemäß der Erfindung.

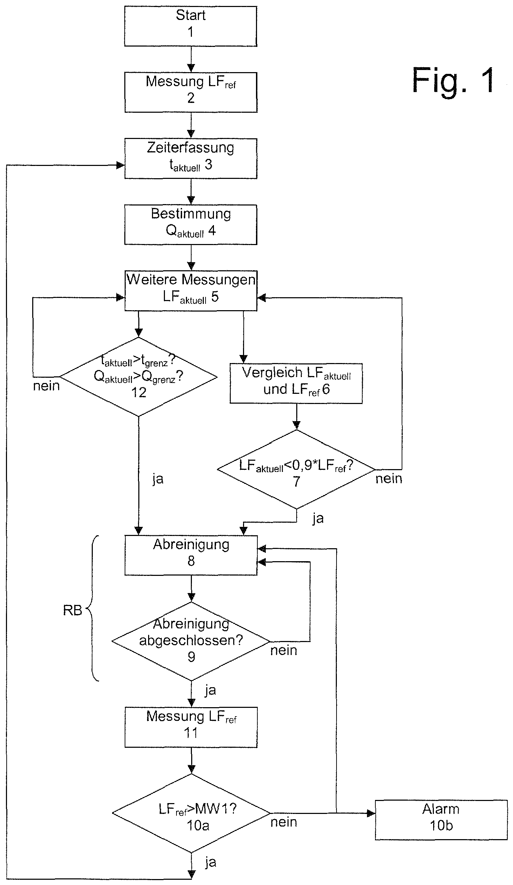

**Fig. 1** zeigt ein Ablaufdiagramm einer Variante des erfindungsgemäßen Verfahrens zur Betrieb eines Leitfähigkeitssensors. Hierbei wird zwischen einem Normalbetrieb, in welchem der Leitfähigkeitssensor zur Messung der Leitfähigkeit einer wässrigen Lösung eingesetzt wird, und einem Reinigungsbetrieb, in welchem die Oberflächen der Messelektroden einer elektrolytischen Reinigung unterzogen werden, gewechselt.

Zu Beginn ("Start" 1) erfasst der Leitfähigkeitssensor einen ersten Messwert der Leitfähigkeit einer wässrigen Messlösung, der als (erste) Referenzleitfähigkeit LF_{ref} gespeichert wird ("Messung LF_{ref}" 2). Mit der Referenz-Leitfähigkeitsmessung wird eine Zeitmessung ("Zeiterfassung tₐₖₜᵤₑₗₗ" 3) gestartet. Ist der Leitfähigkeitssensor in eine Wasserbehandlungsvorrichtung integriert, so kann zusätzlich die durch die Wasserbehandlungsvorrichtung fließende Wassermenge Qₐₖₜᵤₑₗₗ bestimmt werden ("Bestimmung Qₐₖₜᵤₑₗₗ" 4).

Die Leitfähigkeit wird sodann regelmäßig bestimmt ("weitere Messungen LFₐₖₜᵤₑₗₗ" 5), beispielsweise alle fünf Minuten oder auch kontinuierlich, und mit der anfangs gemessenen Leitfähigkeit LF_{ref} verglichen ("Vergleich LFₐₖₜᵤₑₗₗ und LF_{ref}" 6). Die aktuell gemessene Leitfähigkeit LFₐₖₜᵤₑₗₗ nimmt mit der Zeit ab, da sich auf den Messelektrodenoberflächen des Leitfähigkeitssensors während des Betriebes Ablagerungen bilden, die isolierend wirken.

Nun wird geprüft, wie stark die Abnahme der Leitfähigkeit LFₐₖₜᵤₑₗₗ gegenüber der Referenzleitfähigkeit LF_{ref} ist. Fällt die aktuell gemessene Leitfähigkeit LFₐₖₜᵤₑₗₗ (hier) unter 90% der Referenzleitfähigkeit ("LFₐₖₜᵤₑₗₗ < 0,9*LF_{ref} ?" 7), d.h. übersteigt die relative Abnahme der Leitfähigkeit den hier implizit vorgegebenen Grenzwert von 10%, so wird eine Abreinigung gestartet ("Abreinigung" 8); der Leitfähigkeitssensor befindet sich sodann im Reinigungsbetrieb (RB).

Während des Reinigungsbetriebs werden die Messlektroden des Leitfähigkeitssensors als Anode gegen eine weitere Elektrode geschaltet, die dann als Kathode fungiert. Als Kathode kann beispielsweise eine in einer Wasserbehandlungsvorrichtung eingesetzte Elektrode herangezogen werden, beispielsweise eine Elektrode zur Chlorerzeugung. Übersteigt die angelegte Spannung die Zersetzungsspannung des Wassers (üblicherweise werden Spannungen im Bereich von 2V bis etwa 25V verwendet), so bildet sich an den anodisch geschalteten Messelektroden des Leitfähigkeitssensors Säure. Die Säure löst Ablagerungen und befreit die Elektrodenoberflächen von Belägen.

Die Abbruchbedingung der Abreinigung ("Abreinigung abgeschlossen?" 9) kann am Einfachsten den Ablauf einer definierten Zeit, beispielsweise 5 Minuten, nach Beginn des Reinigungsbetriebs vorsehen, nach welcher wieder in den Normalbetrieb (NB) gewechselt wird. Der Normalbetrieb beginnt hierbei mit einer ersten Leitfähigkeitsmessung, mit der ein neuer Leitfähigkeitsreferenzwert LF_{ref} ermittelt wird ("Messung LF_{ref}" 11).

In der vorgestellten Variante wird nun der Erfolg der vorangegangenen Abreinigung kontrolliert. Ist die neue Referenzleitfähigkeit LF_{ref}, also die Leitfähigkeit unmittelbar nach der Abreinigung 8, nicht größer als ein vorgegebener erster Mindestwert MW1 ("LF_{ref} > MW1?" 10a), so kann davon ausgegangen werden, dass die Abreinigung der Elektrodenoberflächen unvollständig war und eine weitere Abreinigung notwendig ist; in diesem Fall wird der Normalbetrieb abgebrochen und eine weitere Abreinigung 8 wird sofort gestartet. Ist die neue Referenzleitfähigkeit LF_{ref} größer als der erste Mindestwert MW1, so kann von einer erfolgreichen Reinigung ausgegangen werden, und der Normalbetrieb kann mit der Zeiterfassung ("Zeiterfassung tₐₖₜᵤₑₗₗ" 3) fortgesetzt werden.

Falls dieser Mindestwert MW1 auch nach mehreren Abreinigungszyklen nicht erreicht wird, kann davon ausgegangen werden, dass ein Defekt vorliegt oder die Ablagerungen durch die anodisch gebildete Säure nicht abgelöst werden können. In diesem Fall kann eine Alarmmeldung ("Alarm" 10b) erfolgen.

Hierfür sollten die Zurückverweisungen von Schritt 10a nach Schritt 8 über einen Zähler mitverfolgt werden; sobald der Zähler beispielsweise zwei Rückverweisungen registriert hat, wird der Alarm 10b ausgelöst; mit Beginn einer neuen Zeiterfassung in Schritt 3 kann der Zähler auf null zurückgesetzt werden (nicht näher dargestellt).

Alternativ oder (bevorzugt) zusätzlich kann die Abreinigung 8 auch unabhängig von der aktuell gemessenen Leitfähigkeit LFₐₖₜᵤₑₗₗ gestartet werden; insbesondere ist eine Einleitung/Wiederholung der Abreinigung nach Ablauf einer vorgegebenen Zeitdauer t_{grenz} und/oder nach Durchfluss einer bestimmten Wassermenge Q_{grenz} nach Beginn eines Normalbetriebsintervalls möglich ("tₐₖₜᵤₑₗₗ > t_{grenz}? oder Qₐₖₜᵤₑₗₗ > Q_{grenz}?" 12). So kann etwa zumindest einmal pro Monat eine Abreinigung 8 stattfinden; bei besonders hartem Wasser können die zeitlichen Abstände der einzelnen Abreinigungen 8 entsprechend verkürzt werden. Ebenso kann eine Abreinigung 8 erfolgen, wenn je nach Wasserhärte beispielsweise zwischen 5 m³ und 40 m³ Messlösung durch den Leitfähigkeitssensor bzw. die Wasserbehandlungsvorrichtung geflossen sind.

Es ist auch möglich, den Erfolg einer Abreinigung dadurch zu kontrollieren, dass die Leitfähigkeiten unmittelbar vor und unmittelbar nach einer Abreinigung 8 verglichen werden. Dazu kann zwischen den Schritten 7 und 8 die letzte aktuelle Leitfähigkeit LF_{letzte} abgespeichert werden. In Schritt 10a kann dann alternativ oder zusätzlich geprüft werden, ob sich die letzte aktuelle Leitfähigkeit LF_{letzte} und die neue Referenzleitfähigkeit LF_{ref} ausreichend unterscheiden (beispielsweise um mehr als 3%, bezogen auf LF_{letzte}). Ist dies nicht der Fall, so erfolgt sofort eine erneute Abreinigung 8, sofern beide Leitfähigkeiten LF_{letzte} und LF_{ref} auch kleiner sind als ein zweiter Mindestwert MW2 (hierbei kann wiederum ein Zähler die Anzahl der Rückverweisungen mitverfolgen und ein Alarm 10b bei mehreren unmittelbar aufeinanderfolgenden Rückverweisungen eingerichtet sein, siehe oben); anderenfalls kann mit dem Normalbetrieb bei der Zeiterfassung 3 fortgesetzt werden (nicht näher dargestellt).

Eine spontan auftretende Änderung der Leitfähigkeit wird in der Regel nicht durch Ablagerungen verursacht, sondern deutet auf eine Änderung der Messlösung hin, beispielsweise durch Wechsel der Wasserqualität in einem Wasserversorgungsgebiet. In diesem Fall kann auf eine sofortige Abreinigung verzichtet werden. Zum Erkennen einer spontanen Änderung der Leitfähigkeit können die Messungen der aktuellen Leitfähigkeit LFₐₖₜᵤₑₗₗ in Schritt 5 in regelmäßigen Zeitabständen vorgenommen werden, und zusätzlich zur aktuellen Leitfähigkeit LFₐₖₜᵤₑₗₗ sollte auch die vorherige aktuelle Leitfähigkeit LFᵥₒᵣₕₑᵣ gespeichert werden. Die Zeitabstände sollten hierbei so kurz sein, dass in diesen Zeiten keine merkliche Veränderung der Ablagerungen an den Elektrodenoberflächen zu erwarten ist und entsprechend keine merkliche Änderung der Leitfähigkeit. Zwischen Schritt 5 und 6 sollten dann LFₐₖₜᵤₑₗₗ und LFᵥₒᵣₕₑᵣ verglichen werden; im Falle einer merklichen Änderung von LFₐₖₜᵤₑₗₗ gegenüber LFᵥₒᵣₕₑᵣ (beispielsweise mehr als 1% Änderung bezogen auf LFᵥₒᵣₕₑᵣ) sollte die Referenzleitfähigkeit LF_{ref} für den weiteren Normalbetrieb entsprechend (proportional) verändert werden, so dass in zukünftigen Schritten 7 der offensichtlich veränderten Wasserqualität Rechnung getragen ist. Der Normalbetrieb kann dann mit Schritt 5 fortgesetzt werden (nicht näher dargestellt).

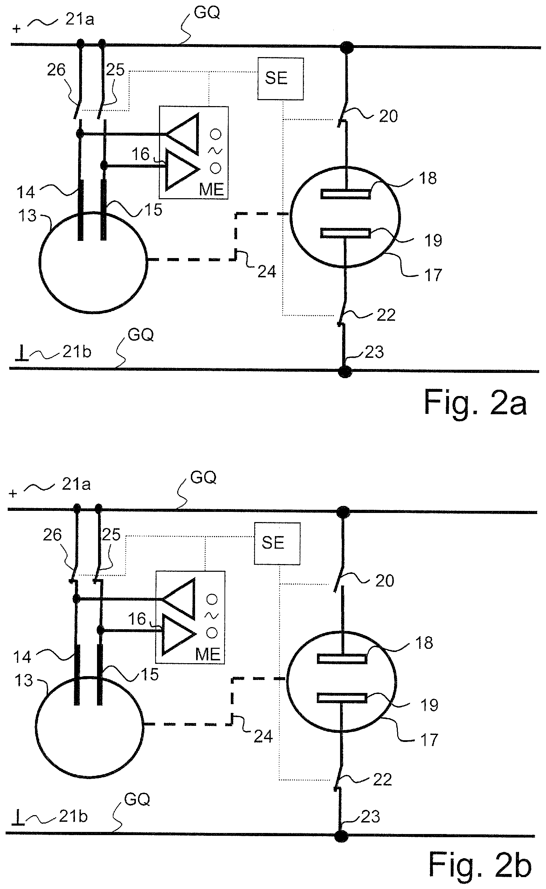

**Fig. 2a** zeigt in schematischer Darstellung einen Teil einer Wasserenthärtungsanlage, umfassend eine erfindungsgemäße Leitfähigkeitssensorstation, wobei die Wasserenthärtungsanlage mit einer elektrolytischen Desinfektionsvorrichtung ausgestattet ist, im Normalbetrieb (NB).

Die Leitfähigkeitssensorstation umfasst insbesondere einen Leitfähigkeitssensor 13, eine Gleichspannungsquelle GQ und eine elektronische Steuereinheit SE.

Der Leitfähigkeitssensor 13 besitzt zwei Messelektroden 14, 15, an die im Normalbetrieb eine Wechselspannung U_{NB} angelegt ist; die Wechselspannung wird durch eine Messelekronik ME des Leitfähigkeitssensors 13 bereit gestellt und ist typischerweise sinusförmig gewählt; die maximale Spannungsdifferenz U_{NB}⁰ während einer Periode von U_{NB} beträgt typischerweise ca. 10-100 mV, also unter der Zersetzungspannung von Wasser.

Durch Messung des elektrischen Stroms zwischen den Messelektroden 14, 15 kann auf die elektrische Leitfähigkeit und damit auf die Qualität einer Messlösung, die zwischen den Messelektroden 14, 15 vorliegt und mit der die Messelektroden 14, 15 in Kontakt stehen, rückgeschlossen werden. Ein Messverstärker 16 in der Messelektronik ME verstärkt das Messsignal des Leitfähigkeitssensors 13. Der Leitfähigkeitssensor 13 kann weiterhin einen Temperaturmessfühler aufweisen (nicht dargestellt); mit dessen Messwerten kann die Temperaturabhängigkeit der gemessenen Leitfähigkeit berücksichtigt (herausgerechnet) werden. Das Messignal des Leitfähigkeitssensors 13 wird zur Steuerung der Wasserenthärtungsfunktion verwendet (insbesondere die Steuerung der Regeneration eines lonentauschers oder auch eine Verschneidungssteuerung, nicht dargestellt). Während des dargestellten Normalbetriebs des Leitfähigkeitssensors 13 sind die Messelektroden 14, 15 durch offene Relais 25, 26 von der Gleichspannungsquelle GQ getrennt.

Die Wasserenthärtungsanlage hat eine integrierte Desinfektionsvorrichtung 17 zur elektrolytischen Erzeugung von Chlor; in Fig. 2a wird gerade Chlor erzeugt (Man beachte, dass während des Normalbetriebs NB des Leitfähigkeitssensors 13 typischerweise nur zeitweise Chlor erzeugt wird). Zur Chlorerzeugung wird an zwei Elektroden 18, 19 der Desinfektionsvorrichtung 17 eine Gleichspannung angelegt, die von der Gleichspannungsquelle GQ zur Verfügung gestellt wird; während der Chlorerzeugung umspült eine Salzsole die Elektroden 18, 19. Die Elektrode 18 wird über ein Relais 20 mit dem Pluspol 21a der Gleichspannungsquelle GQ verbunden und somit anodisch geschaltet, so dass dort im Wasser vorhandene Chlorid-Ionen zu Chlor oxidiert werden. Die Gegenelektrode 19 ist bei geschlossenem Relais 22 über die Verbindung 23 mit dem geerdeten Pol 21b der Gleichspannungsquelle GQ verbunden und somit kathodisch geschaltet.

Wenn kein Chlor mehr erzeugt werden soll, können die beiden Relais 20 und 22 geöffnet werden.

Die Relais 20, 22, 25, 26 sowie die Messelektronik ME werden von der elektronischen Steuereinheit SE kontrolliert (vgl. die gepunkteten Steuerungsleitungen); die Steuereinheit SE kontrolliert insbesondere den Wechsel zwischen Normalbetrieb (Messbetrieb) NB und Reinigungsbetrieb RB des Leitfähigkeitssensors 13. Die Steuereinheit SE kann darüber hinaus auch andere Funktionen in der Wasserbehandlungsvorrichtung wahrnehmen bzw. steuern (etwa die Regeneration eines Ionentauschers einschließlich der Chlorerzeugung zur Desinfektion des Ionentauschers).

**Fig. 2b** zeigt die Wasserenthärtungsanlage von Fig. 2a im Reinigungsbetrieb (RB) des Leitfähigkeitssensors 13.

Zur Abreinigung der Messelektrodenoberflächen wird ein Elektrolysestrom zwischen allen Messelektroden 14, 15 des Leitfähigkeitssensors 13 einerseits und der Elektrode 19 der Desinfektionsvorrichtung 17 als weiterer Elektrode 19 andererseits eingerichtet.

Hierzu werden von der Steuereinheit SE die Messelektroden 14, 15 über die beiden Relais 25, 26 mit dem Pluspol 21a der Gleichspannungsquelle GQ verbunden, während die Elektrode 18 vom Pluspol 21a durch das offene Relais 20 getrennt wird; die Wechselstromquelle in der Messelektronik ME wird deaktiviert. Weiterhin wird die Elektrode 19 über die Verbindung 23 bei geschlossenem Relais 22 mit dem geerdeten Pol 21b verbunden. Durch die Gleichstromquelle GQ wird somit ein Elektrolysestrom zwischen den Messelektroden 14, 15 als Anode und der weiteren Elektrode 19 als Kathode eingerichtet.

Der Leitfähigkeitssensor 13 und die elektrolytische Desinfektionsvorrichtung 17 sind (zumindest im Reinigungsbetrieb) über eine hydraulische Verbindung 24 miteinander verknüpft, d.h. die Messlösung verbindet die Elektroden 14, 15, 19, so dass ein geschlossener Stromkreis für den Elektrolysestrom zur Verfügung steht. Der Leitfähigkeitssensor 13 kann beispielsweise im Zulauf der Wasserenthärtungsanlage angeordnet sein, der zu einem lonentauscher führt, und die Desinfektionsvorrichtung kann in einem Zulauf desselben lonentauschers für Salzsole (bevorzugt diesseits eines etwaigen Absperrventils des Salzsolezulaufs, vom lonentauscher aus gesehen) angeordnet sein.

An den beiden anodisch geschalteten Messelektroden 14, 15 bildet sich durch Zersetzung des Wassers gemäß

2 H₂O → 4 H⁺ + O₂ + 4 e⁻

ein stark saures Medium, das Ablagerungen und Beläge auf den Oberflächen der Messelektroden 14, 15 löst. Zusätzlich werden Verschmutzungen durch das Aufsteigen von direkt auf der Elektrodenoberfläche gebildeten Sauerstoffbläschen von dieser abgehoben.

Die Abreinigung wird regelmäßig durchgeführt und auf einfache Art und Weise automatisch (insbesondere über die Relais 20, 22, 25, 26) von der elektronischen Steuereinheit SE geschaltet. Als Abreinigungskriterien können beispielsweise die Abnahme der mit dem Leitfähigkeitssensor 13 gemessenen Leitfähigkeit, der Ablauf einer vorgegebenen Zeit oder die Behandlung einer definierten Wassermenge herangezogen werden (vgl. hierzu Fig. 1); die Kriterien werden von der elektronischen Steuereinheit SE überwacht.

## Patentansprüche

1. Verfahren zum Betrieb eines Leitfähigkeitssensors (13), der mindestens zwei Messelektroden (14, 15) umfasst, wobei weiterhin eine elektrolytische Wasserbehandlungsvorrichtung betrieben wird,
**dadurch gekennzeichnet, dass**
in einem Reinigungsbetrieb (RB) des Leitfähigkeitssensors (13) eine Gleichspannung U_{RB} an die Messelektroden (14, 15) des Leitfähigkeitssensors (13) angelegt wird, so dass die Messelektroden (14, 15) des Leitfähigkeitssensors (13) im Reinigungsbetrieb (RB) mit einem Elektrolysestrom beaufschlagt werden, wobei die Messelektroden (14, 15) des Leitfähigkeitssensors (13) als Anode gegen wenigstens eine weitere Elektrode (19) geschaltet werden,
dass die wenigstens eine weitere Elektrode (19), gegen die die Messelektroden (14, 15) im Reinigungsbetrieb (RB) des Leitfähigkeitssensors (13) geschalten werden, keine Messelektrode (14, 15) des Leitfähigkeitssensors (13) ist, sondern eine Elektrode der elektrolytischen Wasserbehandlungsvorrichtung,
und dass die im Reinigungsbetrieb (RB) angelegte Gleichspannung größer ist als die Zersetzungsspannung von Wasser.

2. Verfahren nach Anspruch 1, **dadurch gekennzeichnet, dass** zumindest im Reinigungsbetrieb (RB) die Messelektroden (14, 15) und die weitere Elektrode (19) über eine Messlösung verbunden sind.

3. Verfahren nach Anspruch 1 oder 2, **dadurch gekennzeichnet, dass** die elektrolytische Wasserbehandlungsvorrichtung eine in einer Wasserenthärtungsanlage integrierte Desinfektionsvorrichtung (17) ist.

4. Verfahren nach einem der vorhergehenden Ansprüche, **dadurch gekennzeichnet, dass** der Leitfähigkeitssensor (13) in einem Wechsel von
- Normalbetrieb (NB), in welchem die Messelektroden (14, 15) mit einer Wechselspannung U_{NB} beaufschlagt werden und die elektrische Leitfähigkeit einer Messlösung gemessen wird, und
- Reinigungsbetrieb (RB)
betrieben wird.

5. Verfahren nach Anspruch 4, **dadurch gekennzeichnet,**
**dass** gilt: 10 ≤ U_{RB}/U_{NB}⁰ ≤ 2500,
mit U_{NB}⁰: maximale Spannungsdifferenz zwischen den Messelektroden (14, 15) während einer Periode von U_{NB}.

6. Verfahren nach einem der Ansprüche 4 oder 5, **dadurch gekennzeichnet,**
**dass** der Reinigungsbetrieb (RB) nach Ablauf einer vorgegebenen Zeitdauer (t_{grenz}) des Normalbetriebs (NB) gestartet wird.

7. Verfahren nach Anspruch 6, **dadurch gekennzeichnet, dass** die vorgegebene Zeitdauer (t_{grenz}) abhängig ist von der Leitfähigkeit der im Normalbetrieb (NB) durch den Leitfähigkeitssensor (13) fließenden Messlösung.

8. Verfahren nach einem der Ansprüche 4 bis 7, **dadurch gekennzeichnet,**
**dass** der Reinigungsbetrieb (RB) gestartet wird, wenn im Normalbetrieb (NB) eine vom Leitfähigkeitssensor (13) registrierte Abnahme der Leitfähigkeit einen vorgegebenen Grenzwert überschreitet.

9. Verfahren nach Anspruch 8, **dadurch gekennzeichnet, dass** der Reinigungsbetrieb (RB) jedoch nicht gestartet wird, wenn die registrierte Abnahme in kürzerer Zeit als eine vorgegebene Grenzzeitdauer auftritt.

10. Verfahren nach einem der Ansprüche 4 bis 9, **dadurch gekennzeichnet,**
**dass** nach einer definierten Zeit ab Beginn des Reinigungsbetriebs (RB) vom Reinigungsbetrieb (RB) in den Normalbetrieb (NB) gewechselt wird.

11. Verfahren nach einem der Ansprüche 4 bis 10, **dadurch gekennzeichnet,**
**dass** in den Reinigungsbetrieb (RB) zurückgewechselt wird, wenn die Leitfähigkeit (LF_{ref}) gemessen zu Beginn des Normalbetriebes (NB) nach einem Reinigungsbetrieb (RB) einen ersten Mindestwert (MW1) nicht überschreitet.

12. Verfahren nach einem der Ansprüche 4 bis 11, **dadurch gekennzeichnet,**
**dass** eine Alarmmeldung (10b) erfolgt, wenn die unmittelbar vor und unmittelbar nach dem letzten Reinigungsbetrieb (RB) gemessenen Leitfähigkeiten (LF_{letzte}, LF_{ref}) zumindest näherungsweise gleich sind und einen zweiten Mindestwert (MW2) nicht überschreiten.

13. Wasserinstallation, insbesondere Wasserenthärtungsanlage, mit Leitfähigkeitssensorstation und mit in die Wasserinstallation integrierter elektrolytischer Desinfektionsvorrichtung (17),
mit der Leitfähigkeitssensorstation umfassend einen Leitfähigkeitssensor (13) mit wenigstens zwei Messelektroden (14, 15),
**dadurch gekennzeichnet, dass**
die Leitfähigkeitssensorstation weiterhin eine Spannungsquelle, mit der die Messelektroden (14, 15) mit einem Elektrolysestrom beaufschlagt werden können, umfasst,
dass die Spannungsquelle eine Gleichspannungsquelle (GQ) ist, an die die Messelektroden (14, 15) des Leitfähigkeitssensor (13) als Anode angeschlossen sind,
dass die Leitfähigkeitssensorstation eine weitere Elektrode (19) umfasst, die nicht zum Leitfähigkeitssensor (13) gehört, sondern zur elektrolytischen Desinfektionsvorrichtung (17),
dass die weitere Elektrode (19) als Kathode an die Gleichspannungsquelle (GQ) angeschlossen ist,
und dass eine Gleichspannung U_{RB} der Gleichspannungsquelle (GQ) größer ist als die Zersetzungsspannung von Wasser.

14. Wasserinstallation nach Anspruch 13, **dadurch gekennzeichnet, dass** weiterhin eine elektronische Steuereinheit (SE) vorgesehen ist, mit der zwischen
- einer Beaufschlagung der Messelektroden (14, 15) mit einer Wechselspannung in einem Normalbetrieb (NB) zur Messung der elektrischen Leitfähigkeit einer Messlösung und
- einer Beaufschlagung der Messelektroden (14, 15) als Anode und der weiteren Elektrode (19) als Kathode mit der Gleichspannung U_{RB} aus der Gleichspannungsquelle (GQ) in einem Reinigungsbetrieb (RB) umgeschaltet werden kann,
insbesondere wobei die elektronische Steuereinheit (SE) dazu ausgebildet ist, gemäß einem der Ansprüche 4 bis 12 zwischen dem Normalbetrieb (NB) und dem Reinigungsbetrieb (RB) zu wechseln.

15. Wasserinstallation nach Anspruch 13 oder 14, **dadurch gekennzeichnet, dass** die weitere Elektrode (19) eine Chlorelektrode ist.

## Claims

1. Method for operating a conductivity sensor (13) comprising at least two measuring electrodes (14, 15), wherein furthermore an electrolytic water treatment device is operated,
**characterized in that**
during a cleaning operation (RB) of the conductivity sensor (13), a direct voltage U_{RB} is applied to the measuring electrodes (14, 15) of the conductivity sensor (13) such that during cleaning operation (RB), an electrolytic current is applied to the measuring electrodes (14, 15) of the conductivity sensor (13), wherein the measuring electrodes (14, 15) of the conductivity sensor (13) are switched as anode against at least one further electrode (19),
that the at least one further electrode (19), against which the measuring electrodes (14, 15) are switched during cleaning operation (RB) of the conductivity sensor (13), is not a measuring electrode (14, 15) of the conductivity sensor (13) but an electrode of the electrolytic water treatment device,
and that the direct voltage applied during cleaning operation (RB) is larger than the decomposition voltage of water.

2. Method according to claim 1, **characterized in that** at least during cleaning operation (RB), the measuring electrodes (14, 15) and the further electrode (19) are connected via a measurement solution.

3. Method according to claim 1 or 2, **characterized in that** the electrolytic water treatment device is a disinfecting device (17) which is integrated in a water softening system.

4. Method according to any one of the preceding claims, **characterized in that** the conductivity sensor (13) is operated alternately between
- normal operation (NB) in which an alternating voltage U_{NB} is applied to the measuring electrodes (14, 15) and the electric conductivity of a measurement solution is measured, and
- cleaning operation (RB).

5. Method according to claim 4, **characterized in that** the following applies:
10≤U_{RB}/U_{NB}⁰<2500,
with U_{NB}⁰: maximum voltage difference between the measuring electrodes (14, 15) during a period of U_{NB}.

6. Method according to any one of the claims 4 or 5, **characterized in that** the cleaning operation (RB) is started after lapse of a predetermined time period (t_{grenz}) of normal operation (NB).

7. Method according to claim 6, **characterized in that** the predetermined time period (t_{grenz}) depends on the conductivity of the measurement solution that flows through the conductivity sensor (13) during normal operation (NB).

8. Method according to any one of the claims 4 through 7, **characterized in that** the cleaning operation (RB) is started when a decrease in the conductivity, which is registered by the conductivity sensor (13) during normal operation (NB), exceeds a predetermined limit value.

9. Method according to claim 8, **characterized in that** the cleaning operation (RB) is not started if the registered decrease occurs within a shorter time than a predetermined limit time period.

10. Method according to any one of the claims 4 to 9, **characterized in that** after a defined time starting from the beginning of the cleaning operation (RB), a change from cleaning operation (RB) to normal operation (NB) is done.

11. Method according to any one of the claims 4 to 10, **characterized in that** a change back to cleaning operation (RB) is done if the conductivity (LF_{ref}) measured at the start of normal operation (NB) after a cleaning operation (RB) does not exceed a first minimum value (MW1).

12. Method according to any one of the claims 4 to 11, **characterized in that** an alarm message (10b) is issued if the conductivities (LF_{letzte}, LF_{ref}) measured directly prior to and directly after the last cleaning operation (RB) are at least approximately identical and do not exceed a second minimum value (MW2).

13. Water installation, in particular water softening system, comprising a conductivity sensor station and an electrolytic disinfecting device (17) which is integrated in the water installation, the conductivity sensor station comprising a conductivity sensor (13) comprising at least two measuring electrodes (14, 15), **characterized in that**
the conductivity sensor station furthermore comprises a voltage source by means of which an electrolytic current can be applied to the measuring electrodes (14, 15),
that the voltage source is a direct voltage source (GQ) to which the measuring electrodes (14, 15) of the conductivity sensor (13) are connected as anode,
that the conductivity sensor station comprises a further electrode (19) which does not belong to the conductivity sensor (13) but to the electrolytic disinfecting device (17).
that the further electrode (19) is connected to the direct voltage source (GQ) as cathode,
and that a direct voltage U_{RB} of the direct voltage source (GQ) is larger than the decomposition voltage of water.

14. Water installation according to claim 13, **characterized in that** furthermore an electronic control unit (SE) is provided by means of which it is possible to switch between
- applying an alternating voltage to the measuring electrodes (14, 15) in normal operation (NB) for measuring the electric conductivity of a measurement solution, and
- applying the direct voltage U_{RB} from the direct voltage source (GQ) to the measuring electrodes (14, 15) as anode and the further electrode (19) as cathode in a cleaning operation (RB),
in particular wherein the electronic control unit (SE) is designed to change between normal operation (NB) and cleaning operation (RB) in accordance with one of the claims 4 to 12.

15. Water installation according to claim 13 or 14, **characterized in that** the further electrode (19) is a chlorine electrode.

## Revendications

1. Procédé de fonctionnement d'un capteur de conductivité (13) qui comprend au moins deux électrodes de mesure (14, 15), le procédé permettant en outre de faire fonctionner un dispositif de traitement de l'eau,
**caractérisé en ce**
**que** pendant un fonctionnement en nettoyage (RB) du capteur de conductivité (13), une tension continue U_{RB} est appliquée aux électrodes de mesure (14, 15) du capteur de conductivité (13), de sorte que les électrodes de mesure (14, 15) du capteur de conductivité (13) sont soumises à un courant d'électrolyse pendant le fonctionnement en nettoyage (RB), les électrodes de mesure (14, 15) du capteur de conductivité (13) étant branchées en tant qu'anode contre au moins une autre électrode (19),
**que** ladite au moins une autre électrode (19), contre laquelle les électrodes de mesure (14, 15) sont branchées pendant le fonctionnement en nettoyage (RB) du capteur de conductivité (13), n'est pas une électrode de mesure (14, 15) du capteur de conductivité (13) mais une électrode du dispositif électrolytique de traitement de l'eau,
et **que** la tension continue appliquée pendant le fonctionnement en nettoyage (RB) est supérieure à la tension de décomposition de l'eau.

2. Procédé selon la revendication 1, **caractérisé en ce qu'**au moins pendant le fonctionnement en nettoyage (RB), les électrodes de mesure (14, 15) et l'autre électrode (19) sont reliées par une solution de mesure.

3. Procédé selon la revendication 1 ou 2, **caractérisé en ce que** le dispositif électrolytique de traitement de l'eau est un dispositif de désinfection (17) intégré dans une installation d'adoucissement de l'eau.

4. Procédé selon l'une des revendications précédentes, **caractérisé en ce que** le capteur de conductivité (13) est utilisé en alternance dans
- un fonctionnement normal (NB), pendant lequel les électrodes de mesure (14, 15) sont soumises à une tension alternative U_{NB} et la conductivité électrique d'une solution de mesure est mesurée, et
- un fonctionnement en nettoyage (RB).

5. Procédé selon la revendication 4, **caractérisé en ce que** :
10 ≤ U_{RB}/U_{NB}⁰≤ 2500,
avec U_{NB}⁰ : différence de tension maximale entre les électrodes de mesure (14, 15) pendant une période de U_{NB}.

6. Procédé selon l'une des revendications 4 ou 5, **caractérisé en ce que** le fonctionnement en nettoyage (RB) est démarré après écoulement d'une durée prédéfinie (t_{grenz}) du fonctionnement normal (NB).

7. Procédé selon la revendication 6, **caractérisé en ce que** la durée prédéfinie (t_{grenz}) dépend de la conductivité de la solution de mesure passant à travers le capteur de conductivité (13) pendant le fonctionnement normal (NB).

8. Procédé selon l'une des revendications 4 à 7, **caractérisé en ce que** le fonctionnement en nettoyage (RB) est démarré si, pendant le fonctionnement normal (NB), une diminution de la conductivité enregistrée par le capteur de conductivité (13) dépasse une valeur limite prédéfinie.

9. Procédé selon la revendication 8, **caractérisé en ce que** le fonctionnement en nettoyage (RB) n'est cependant pas démarré si la diminution enregistrée se produit dans un laps de temps plus court qu'une durée limite prédéfinie.

10. Procédé selon l'une des revendications 4 à 9, **caractérisé en ce que** l'on passe du fonctionnement en nettoyage (RB) en fonctionnement normal (NB) après un temps défini à partir du début du fonctionnement en nettoyage (RB).

11. Procédé selon l'une des revendications 4 à 10, **caractérisé en ce que** l'on repasse en fonctionnement en nettoyage (RB) si la conductivité (LF_{ref}) mesurée au début du fonctionnement normal (NB) ne dépasse pas une première valeur minimale (MW1) après un fonctionnement en nettoyage (RB).

12. Procédé selon l'une des revendications 4 à 11, **caractérisé en ce qu'**un message d'alarme (10b) est émis lorsque les conductivités (LF_{letzte}, LF_{ref}) mesurées immédiatement avant et immédiatement après le dernier fonctionnement en nettoyage (RB) sont au moins approximativement égales et ne dépassent pas une deuxième valeur minimale (MW2).

13. Installation hydraulique, en particulier installation d'adoucissement de l'eau, avec une station de détection de conductivité et avec un dispositif de désinfection électrolytique (17) intégré dans l'installation hydraulique,
la station de détection de conductivité comprenant un capteur de conductivité (13) comportant au moins deux électrodes de mesure (14, 15),
**caractérisée en ce**
**que** la station de détection de conductivité comprend en outre une source de tension avec laquelle les électrodes de mesure (14, 15) peuvent être soumises à un courant d'électrolyse,
**que** la source de tension est une source de tension continue (GQ) à laquelle les électrodes de mesure (14, 15) du capteur de conductivité (13) sont raccordées en tant qu'anode,
**que** la station de détection de conductivité comprend une autre électrode (19) qui ne fait pas partie du capteur de conductivité (13) mais du dispositif de désinfection électrolytique (17),
**que** l'autre électrode (19) est raccordée en tant que cathode à la source de tension continue (GQ)
et **qu'**une tension continue U_{RB} de la source de tension continue (GQ) est supérieure à la tension de décomposition de l'eau.

14. Installation hydraulique selon la revendication 13, **caractérisée en ce qu'**il est prévu en outre une unité de commande électronique (SE) qui permet une commutation entre
- une application aux électrodes de mesure (14, 15) d'une tension alternative pendant un fonctionnement normal (NB) servant à mesurer la conductivité électrique d'une solution de mesure et
- une application aux électrodes de mesure (14, 15) en tant qu'anode et à l'autre électrode (19) en tant que cathode de la tension continue U_{RB} de la source de tension continue (GQ) pendant un fonctionnement en nettoyage (RB),
l'unité de commande électronique (SE) étant en particulier conçue pour alterner entre le fonctionnement normal (NB) et le fonctionnement en nettoyage (RB) selon l'une des revendications 4 à 12.

15. Installation hydraulique selon la revendication 13 ou 14, **caractérisée en ce que** l'autre électrode (19) est une électrode au chlore.
